Europäisches Patentamt

European Patent Office

Office européen des brevets

(11) Veröffentlichungsnummer: **0 223 053 B1**

# EUROPÄISCHE PATENTSCHRIFT

(45) Veröffentlichungstag der Patentschrift: **19.06.91**

(21) Anmeldenummer: **86114085.3**

(22) Anmeldetag: **10.10.86**

(51) Int. Cl.⁵: **E04C  2/36,** E04C 2/32, B32B 3/18, H01Q 15/14

(54) **Sandwichbauteil.**

(30) Priorität: **14.11.85 DE 3540352**

(43) Veröffentlichungstag der Anmeldung:
**27.05.87 Patentblatt  87/22**

(45) Bekanntmachung des Hinweises auf die
Patenterteilung:
**19.06.91 Patentblatt  91/25**

(84) Benannte Vertragsstaaten:
**FR GB IT NL**

(56) Entgegenhaltungen:
**DE-A- 1 815 392       DE-A- 3 315 246
FR-A- 2 498 519       FR-A- 2 501 578
GB-A- 988 064        GB-A- 1 023 858
GB-A- 1 274 139       US-A- 3 137 602
US-A- 3 391 511**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Koletzko, Wolfram
Josef-Koch-Strasse 9
W-8208 Kolbermoor(DE)**

## Beschreibung

Die Erfindung bezieht sich auf ein Sandwichbauteil nach dem Oberbegriff des Patentanspruchs 1.

Bekannte Sandwichbauteile dieser Art (DE-A-3 315 246) mit einem spannungsfrei zwischen die Deckschichten eingeklebten, wabenförmigen Stützkern gekrümmter Oberflächenkontur, der aus einzeln gehärteten und in paralleler Anordnung gegenseitig verklebten Faserverbund-Rohrstücken besteht, sind besonders für Anwendungsfälle geeignet, wo es neben einem, bezogen auf die Steifigkeit, geringen Eigengewicht auf eine hochgradige Konturentreue und Formstabilität der Bauteiloberfläche unter Temperaturschwankungen ankommt. Ein solcher Anwendungsfall ist z.B. ein Radioteleskop-Spiegel von mehr als 10 m Durchmesser, der aus mehreren, jeweils ein Paraboloid-Spiegelsegment bildenden Sandwichbauteilen zusammengesetzt ist und unter starken Temperaturdifferenzen eine gleichbleibend hohe Oberflächengenauigkeit beibehalten muß. Aufgrund der anisotropen Wärmeausdehnungs- und Festigkeitseigenschaften der Faserverbund-Rohrstücke und ihrer gegenseitig linienförmigen Verklebung ohne definierte Klebeflächen können sich jedoch bei diesen bekannten Sandwichbauteilen eine unvollständige Materialauslastung und örtliche Verzerrungen der Bauteiloberfläche ergeben, die, wenngleich von sehr kleiner Größenordnung, den strengen Anforderungen z.B. für die erwähnten Spiegelsegmente nicht genügen.

Bekannt sind weiterhin Sandwichbauteile mit einem hexagonalen Aluminium-Wabenkern, der entsprechend der Bauteilkrümmung elastisch verformt und unter Eigenspannung zwischen die Deckschichten eingeklebt werden muß, um seine Wabenstege jeweils senkrecht zur örtlichen Bauteilkrümmung zu halten, und der ferner eine in Längen- und Breitenrichtung des Bauteils ungleichförmige Wabenkernstruktur besitzt. Die Oberflächengenauigkeit derartiger Sandwichbauteile bei größeren Temperaturdifferenzen ist im Vergleich zu den in den erwähnten Anwendungsfällen zugelassenen, sehr engen Toleranzen (ca. 1 μm) gering.

Ferner ist aus der FR-A-2 501 578 ein Sandwichbauteil bekannt, dessen Stützkern aus parallel zueinander und zu den Deckschichten angeordneten Metallprofilen zusammengesetzt ist, die einen im wesentlichen trapezförmigen, in Profil-Längsrichtung konstanten Hohlquerschnitt mit senkrecht zur Bauteilkrümmung verlaufenden Profil-Seitenwänden besitzen. Bei diesem bekannten Sandwichbauteil ergeben sich in Richtung der Bauteil-Hauptachsen ungleichförmige, mechanisch und thermisch bedingte Formänderungen und eine relativ geringe Druck- und Querschubsteifigkeit.

Aufgabe der Erfindung ist es, ein Sandwichbauteil der beanspruchten Art so auszubilden, daß eine sehr hohe Oberflächengenauigkeit und Formbeständigkeit über einen weiten Temperaturbereich zu erzielen ist.

Diese Aufgabe wird erfindungsgemäß durch das im Anspruch 1 gekennzeichnete Sandwichbauteil gelöst.

Bei dem erfindungsgemäßen Sandwichbauteil sind die Faserverbund-Hohlprofilstücke des Stützkerns jeweils einzeln derart konisch vorgeformt und ausgehärtet, daß die Profilwandungen jedes Profilstücks im Stützkern im wesentlichen senkrecht zur gekrümmten Oberfläche verlaufen. Der Stützkern bildet eine ohne elastische Verformung gekrümmte, wabenförmige Faserverbundstruktur mit einem in Bauteil-Dickenrichtung quasi-homogenen Wärmeausdehnungs-und Festigkeitsverhalten, so daß den Anforderungen nach höchster Oberflächengenauigkeit (ca. 1 μm) über einen weiten Temperaturbereich (z.B.-50° bis +100 C) voll entsprochen werden kann.

Im Hinblick auf eine weitere Vergleichmäßigung des Festigkeits-und Wärmeausdehnungsverhaltens der wabenförmigen Faserverbundstruktur sind gemäß Anspruch 2 sämtliche Hohlprofilstücke gleich lang ausgebildet, also die Deckschichten durch den Stützkern äquidistant auf Abstand gehalten, und zugleich haben auch die einzelnen Klebestellen zwischen den Profilstücken über den gesamten Stützkern gleiche Abmessungen in Bauteil-Dickenrichtung.

Durch die Merkmale des Anspruchs 3 wird -wahlweise, vorzugsweise aber zusätzlich zu der Lösung nach Anspruch 1-die thermische Formstabilität und Oberflächengenauigkeit des Sandwichbauteils ebenfalls deutlich verbessert: Die einzelnen Faserverbund-Hohlprofilstücke sind mit den benachbarten Profilstücken jeweils über definierte, ebene Klebstofflächen verbunden, zwischen denen sich jeweils eine freie, mit Durchlässen zur Entlüftung der Wabenstruktur versehene Profilwandung befindet, mit der Besonderheit, daß die Wabenstruktur aufgrund der speziellen Form und gegenseitigen Anordnung und Flächenverklebung der Profilstücke keine Vorzugsrichtung besitzt, sondern über einen völlig symmetrischen Aufbau in Längen-und Breitenrichtung verfügt. Dies garantiert eine definierte, gleichmäßige Wärmeausdehnung der Wabenstruktur und eine hochgradige Formbeständigkeit der Bauteiloberfläche über einen weiten Temperaturbereich.

Im Hinblick auf eine herstellungsgemäßig günstige und zugleich last-und werkstoffgerechte Einzelfertigung der Profilstücke sind diese gemäß Anspruch 4 vorzugsweise im Wickelverfahren mit sich kreuzender Faseranordnung hergestellt, wobei die Profilwandungen in weiterer vorteilhafter Ausgestaltung gemäß Anspruch 5 gleich beim Wickelvorgang durch entsprechende Ablage des Verstärkungsfadens mit den zur Entlüftung der Wabenstruktur benötigten Durchbrüchen versehen werden. Für eine Einzelfertigung von sowohl konisch verjüngten als auch oktagonalen Faserverbund-Waben wird zweckmäßigerweise der Wickeldorn gemäß Anspruch 6 verwendet. Werden die Deckschichten z.B. in den eingangs erwähnten Anwendungsfall eines Radioteleskopspiegels aus Keramikmaterial hergestellt, so empfiehlt es sich gemäß Anspruch 7, die einzelnen Faserverbund-Waben aus Kohlefasern zu wickeln, wobei die Faserorientierung so gewählt wird, daß der thermische Ausdehnungskoeffizient der Waben-Profilstücke mit dem des Keramikmaterials übereinstimmt.

Die Erfindung wird nunmehr anhand der Zeichnungen beispielsweise näher beschrieben. Es zeigt:

Fig. 1    einen im Querschnitt oktagonalen, konisch verjüngten Wickeldorn zur Herstellung eines Faserverbund-Hohlprofilstücks mit einer aus mehreren Wickellagen aufgebauten Profilwandung in schematischer Darstellung;

Fign. 2a, b    das Profilstück gemäß Fig. 1 in der Aufsicht bzw. im Längsschnitt;

Fig. 3    einen Verbund mehrerer, jeweils eine Stützkern-Einzelwabe bildender Profilstücke;

Fig. 4    eine perspektivische Teildarstellung eines aus Einzelwaben in Form konischer, oktagonaler Hohlprofilstücke zusammengesetzten Stützkerns räumlich gekrümmter Oberflächenkontur;

Fig. 5    einen schematischen Teilschnitt eines Sandwich-Bauteils mit dem Stützkern gemäß Fig.4.

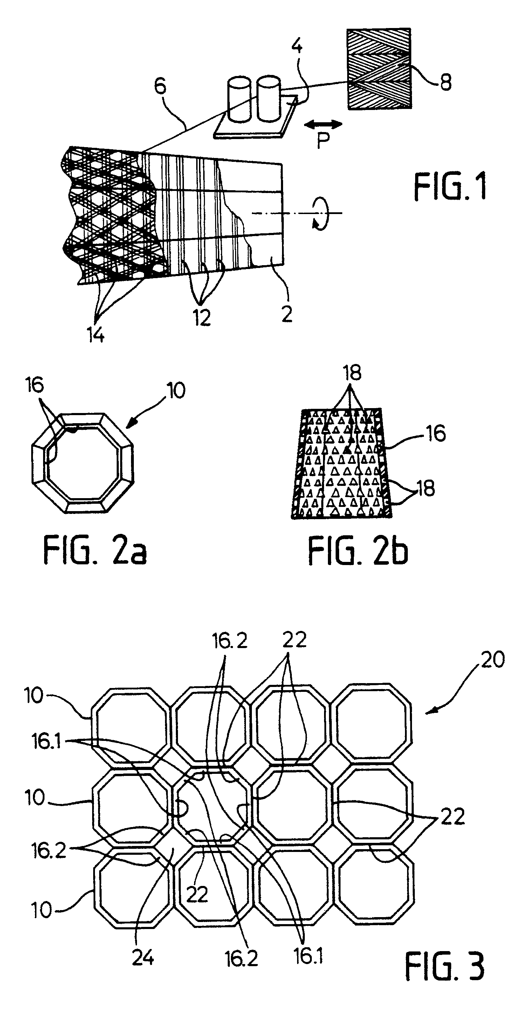

Wie Fig. 1 zeigt, wird ein konisch verjüngter, umlaufender, metallischer Wickeldorn 2 von regelmäßig achteckigem Querschnitt mit Hilfe einer in Pfeilrichtung hin-und herbeweglichen Fadenführung 4 kontinuierlich mit einem Faserverbundfaden 6, z.B. einem harzgetränkten Kohlefaden, von einer Garnrolle 8 mehrlagig derart bewickelt, daß die Faserorientierung in den einzelnen Wickellagen unter Berücksichtigung des Faservolumenanteils im fertigen Faserverbund-Profilstück 10 (Fig. 2) eine vorgegebene Festigkeit und einen definierten Wärmeausdehnungskoeffizienten in Richtung der Wickeldorn-Achse, also in Profillängsrichtung, ergibt. In Fig. 1 ist ein dreilagiger Laminataufbau mit einer inneren Wickellage 12 mit einem Wickelwinkel von nahezu 90° bezüglich der Profil-Längsachse, einer mittleren Wickellage 14 mit einem Wickelwinkel von ± 30°, sowie einer äußeren Wickellage (nicht gezeigt) mit einem Wickelwinkel von ebenfalls etwa 90° angedeutet.

Wie Fig. 1 ferner zeigt, wird die Bewicklung des Wickeldorns 2 mit ungleichförmiger Fadendichte ausgeführt, d.h. es werden Lücken zwischen den ansonsten dicht nebeneinanderliegenden Fadenwindungen frei gehalten, so daß nach dem Aushärten und Entformen des Hohlprofilstücks 10 in den Profilwandungen 16 eine Vielzahl von offenen Stellen in Form von feinen Durchlässen 18 in im wesentlichen gleichmäßiger Verteilung verbleiben (Fig. 2b).

Aus auf diese Weise einzeln vorgefertigten, gleichartigen Profilstücken 10 wird gemäß Fig. 3 ein Stützkern 20 zusammengesetzt, der einen in Längen-und Breitenrichtung völlig symmetrischen Aufbau besitzt, wobei jedes Hohlprofilstück 10 eine vollständige Achteck-Einzelwabe bildet, die mit den Nachbarwaben durch flächige Verklebungen 22 verbunden ist. Als definierte Klebeflächen für eine großflächige Verklebung 22 sind die Außenseiten der vier Profilwandungen 16.1 jedes Profilstücks 10 vorgesehen, während die restlichen vier, in Umfangsrichtung des Profilstücks 10 zu den Profilwandungen 16.1 alternierenden Profilwandungen 16.2 frei gehalten sind. Die freiliegenden, von unversperrten Durchlässen 18 durchsetzten Profilwandungen 16.2 begrenzen auf ihrer Außenseite im Querschnitt rechteckige Zwischenräume 24, über die die Innenräume sämtlicher Einzelwaben des Stützkerns 20 miteinander in Verbindung stehen, wodurch ein ungestörter Druckausgleich bzw. eine Entlüftung der gesamten Wabenstruktur im fertigen Bauteil gewährleistet wird.

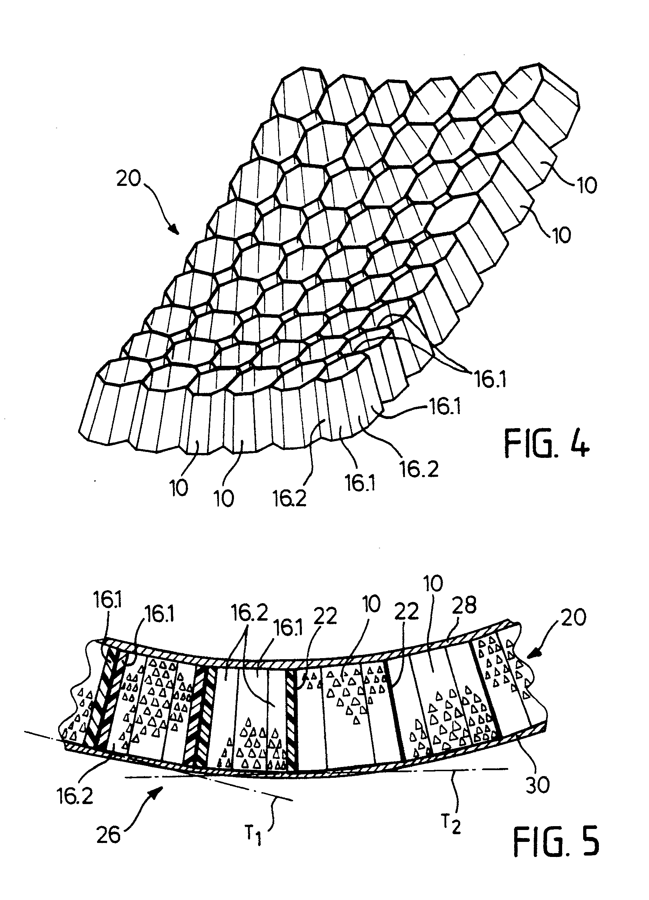

Fig. 4 zeigt eine perspektivische Teildarstellung eines aus gleichartigen, konisch verjüngten Achteck-Hohlprofilstücken 10 zusammengesetzten Stützkerns 20 mit einer räumlich gekrümmten, nämlich kugelkalottenförmigen Oberflächenkontur. Stützkerne anderer Oberflächenkontur werden aus Hohlprofilstücken zusammengesetzt, die zwar ebenfalls einen oktagonalen Querschnitt und gleiche Profillänge, aber unterschiedliche Konuswinkel haben. D.h. zur , Herstellung der Profilstücke 10 werden Wickeldorne 2 benötigt, deren Außenflächen bezüglich der Wikkeldorn-Achse unterschiedlich stark geneigt sind.

Fertiggestellt wird das Sandwichbauteil 26 (Fig. 5) durch Aufkleben der oberen und der unteren Deckschichten 28, 30, die von dem Stützkern 20 äquidistant auf Abstand gehalten werden. Die Profilwandungen 16 und die flächigen Verklebungen 22 verlaufen im wesentlichen senkrecht zur örtlichen Tangentialebene, wie dies in Fig. 5 für die örtliche Tangentialebene T₁ und die zugehörigen Profilwandungen 16.1 sowie für die Tangentialebene T₂ und die zugehörige Verklebung 22 gezeigt ist. Der Wärmeausdehnungskoeffizient der Profilstücke 10 in Profillängs-, also in Bauteil-Dickenrichtung wird auf die oben beschriebene Weise, nämlich durch entsprechende Bewicklung des Wickeldorns 2, gleich dem des Deckschichtmaterials gehalten. Im Falle eines Teleskopspiegels bestehen die Deckschichten 28, 30 vorzugsweise aus Keramikmaterial.

## Ansprüche

1. Sandwichbauteil (26) mit einer oberen und einer unteren Deckschicht (28,30) und einem zwischen diese im spannungsfreien Zustand eingeklebten Stützkern gekrümmter Oberflächenkontur (20), der aus einer Vielzahl von einzeln vorgefertigten, im Querschnitt geschlossenen Hohlprofilelementen (10) zusammengesetzt ist, die an ihren im wesentlichen senkrecht zur örtlichen Tangetialebene der gekrümmten Stützkern-Oberfläche verlaufenden, aneinanderliegenden Profilwandungen gegenseitig verklebt sind, dadurch **gekennzeichnet, daß** die Profilelemente jeweils als zwischen den Deckschichten (28, 30) aufrechtstehend nebeneinander angeordnete Faserverbund-Profilstücke (10) mit einem sich in Profil-Längsrichtung verjüngenden Querschnitt ausgebildet und zu einer in Längen- und Breitenrichtung des Sandwichbauteils (26) gleichmäßig wabenförmigen Stützkernstruktur (20) zusammengesetzt sind.

2. Sandwichbauteil nach Anspruch 1, dadurch **gekennzeichnet, daß** die Länge der Profilstücke (10) sowie ihrer gegenseitigen Klebestellen (22) in Bauteil-Dikkenrichtung jeweils im gesamten Stützkern (20) im wesentlichen konstant ist.

3. Sandwichbauteil, nach Anspruch 1, mit einer oberen und einer unteren Deckschicht (28,30) und einem wabenförmigen Stützkern (20) zwischen diesen, der aus einer Vielzahl von einzeln gehärteten und aneinanderliegend gegenseitig verklebten, aufrechtstehenden Profilstücken (10) aus Faserverbundwerkstoff zusammengesetzt ist, dadurch **gekennzeichnet, daß** die einzelnen Faserverbund-Profilstücke (10) im Querschnitt oktagonal ausgebildet und ihre Profilwandungen (16) im Stützkern (20) jeweils abwechselnd freigehalten (Profilwandungen 16.2) und flächig mit einem benachbarten Profilstück verklebt sind (Profilwandungen 16.1).

4. Sandwichbauteil nach einem der vorhergehenden Ansprüche, dadurch **gekennzeichnet, daß** die einzelnen Faserverbund-Profilstücke (10) im Wickelverfahren mit sich kreuzender Faserorientierung hergestellt sind.

5. Sandwichbauteil nach einem der vorhergehenden Ansprüche, dadurch **gekennzeichnet, daß** die einzelnen Faserverbund-Profilstücke (10) mit zwischen den Verstärkungsfasern freigehaltenen Durchbrüchen (18) gewickelt sind.

6. Sandwichbauteil nach den Ansprüchen 1 bis 5, dadurch **gekennzeichnet, daß** die einzelnen Profilstücke (10) mit Hilfe eines konisch verjüngten Wickeldorns (2) mit regelmäßig achteckigem Wickeldornquerschnitt hergestellt sind.

7. Sandwichbauteil nach einem der vorhergehenden Ansprüche, dadurch **gekennzeichnet, daß** die Deckschichten (28, 30) aus einem Keramikmaterial und die Profilstücke (10) aus Kohlefaser-Verbundwerkstoff mit einer auf den thermischen Ausdehnungskoeffizienten des Keramikmaterials abgestimmten Faserorientierung hergestellt sind.

## Claims

1. Sandwich component (26), comprising an upper and a lower covering layer (28, 30) and a support core (20) of curved surface contour glued thereinbetween in a tension-free state, which core is composed of a plurality of individually pre-fabricated and cross-sectionally sealed hollow-profile members (10) which are glued together at their adjacent profile walls which extend substantially vertically to the local tangential plane of the curved support-core surface, characterised in that the profile elements are fibre-compound profile members (10), arranged to stand upright next to one another between the covering layers (28, 30), with a cross-section which narrows in the longitudinal direction of the profile, and are assembled into an alveolate support core structure (20) which is uniform in the longitudinal and width direction of the sandwich component (26).

2. Sandwich component according to claim 1, characterised in that the length of the profile members (10) and that of its respective glueing locations (22) in the direction of the component thickness is substantially constant relative to the entire support core (20).

3. Sandwich component according to claim 1 comprising an upper and a lower covering layer (28, 30) and an alveolate support core (20) thereinbetween, which core is composed of a plurality of profile members (10) of fibre-compound material, which are individually cured, placed adjacent to one another and thus glued together, characterised in that the individual fibre-compound profile members (10) are cross-sectionally octagonal, and their profile walls (16) in the support core (20) are alternately kept clear (profile walls 16.2) and glued flat to an adjacent profile member (profile walls 16.1).

4. Sandwich component according to one of the above claims, characterised in that the individual fibre-compound profile members (10) are manufactured by way of winding with intersecting fibre orientation.

5. Sandwich component according to one of the above claims, characterised in that the individual fibre-compound profile members (10) are wound with passages (18) kept clear between the enforcing fibres.

6. Sandwich component according to claims 1 to 5, characterised in that the individual profile members (10) are manufactured with the aid of a conically narrowing winding bobbin (2) which has regular octagonal cross-section.

7. Sandwich component according to one of the above claims, characterised in that the covering layers (28, 30) are manufactured of a ceramics materials, and the profile members (10) are made of a carbon-fibre-compound material the fibre orientation of which is matched with the thermal expansion coefficients of the ceramic material.

**Revendications**

1. Elément en construction sandwich (26) comprenant une couche de recouvrement supérieure et inférieure (28, 30) et un noyau de renfort à contour de surface incurvé, qui est collé à l'état exempt de contraintes entre les couches et se compose d'une multitude de profilés creux (10) qui sont préfabriqués individuellement, fermés en section et sont collés les uns contre les autres par leurs parois de profil essentiellement perpendiculaires au plan tangent local de la surface incurvée du noyau de renfort et appliquées les unes contre les autres, caractérisé par le fait que les éléments profilés sont chaque fois des profilés (10) en matériau composite à renfort de fibres qui présentent une section convergente dans la direction longitudinale des profilés, sont disposés debout les uns à côté des autres et sont réunis pour former une structure (20) à noyau de renfort présentant des nids d'abeille réguliers dans la direction de la longueur et de la largeur de l'élément en construction sandwich (26).

2. Elément en construction sandwich selon la revendication 1, caractérisé par le fait que la longueur des profilés (10) et de leurs emplacements de collage (22) réciproques est sensiblement constante dans tout le noyau de renfort (20), dans la direction de l'épaisseur de l'élément.

3. Elément en construction sandwich selon la revendication 1, comprenant une couche de recouvrement supérieure et inférieure (28, 30) et un noyau de renfort (20) à nids d'abeille qui est disposé entre ces couches et se compose d'une multitude d'éléments profilés (10) en matériau composite à renfort de fibres, durcis individuellement, qui sont disposés debout et appliqués et collés les uns contre les autres, caractérisé par le fait que les différents profilés (10) à renfort de fibres ont une section octogonale et leurs parois de profit (16) dans le noyau de renfort (20) sont en alternance maintenues libres (parois de profit 16.2) et collées à plat avec un profilé voisin (parois de profit 16.1).

4. Elément en construction sandwich selon l'une des revendications précédentes, caractérisé par le fait que les différents profilés (10) en matériau composite à renfort de fibres sont fabriqués par enroulement, avec des orientations de fibres croisées.

5. Elément en construction sandwich selon l'une des revendications précédentes, caractérisé par le fait que les différents profilés (10) en matériau composite à renfort de fibres sont enroulés en laissant subsister des ajours (18) entre les fibres de renfort.

6. Elément en construction sandwich selon les revendications 1 à 5, caractérisé par le fait que les différents profilés (10) sont fabriqués à l'aide d'un mandrin d'enroulement (2) conique à section octogonale régulière.

7. Elément en construction sandwich selon l'une des revendications précédentes, caractérisé par le fait que les couches de recouvrement (28, 30) sont fabriquées à partir d'un matériau céramique et les profilés (10) à partir d'un matériau composite renforcé par fibres de carbone, avec une orientation de fibres qui est adaptée au coefficient de dilatation thermique du matériau céramique.

FIG.1

FIG. 2a

FIG. 2b

FIG. 3

7

FIG. 4

FIG. 5